# EUROPÄISCHE PATENTSCHRIFT

(11) **EP 0 314 899 B1**
(45) Veröffentlichungstag und Bekanntmachung des Hinweises auf die Patenterteilung: **10.03.1993**
(21) Anmeldenummer: 88114652.6
(22) Anmeldetag: 08.09.1988
(51) Int. Cl.: B60L 13/02, H02K 15/06, H02K 41/02

(54) **Verfahren und Vorrichtung zum Einbringen einer Wicklung in den Induktor eines Linearmotors**
Method and apparatus for introducing a winding into the inductor of a linear motor
Méthode et dispositif pour l'introduction d'un enroulement dans l'inducteur d'un moteur linéaire

(30) Priorität: 06.11.1987 DE 3737719
(43) Veröffentlichungstag der Anmeldung: 10.05.1989
(73) Patentinhaber: kabelmetal electro GmbH, 30002 Hannover (DE); THYSSEN INDUSTRIE AG, 45128 Essen (DE)
(72) Erfinder: Raschbichler, Hans Georg, Dipl.-Ing., D-8012 Ottobrunn (DE); Miller, Luitpold, Ing.grad., D-8012 Ottobrunn (DE); Wcislo, Manfred, D-8012 Ottobrunn (DE); Breitenbach, Otto, Dipl.-Ing., D-8500 Nürnberg (FR)

(56) Entgegenhaltungen:
- DE-A- 3 309 051
- FR-A- 2 390 846
- FR-A- 2 548 479

## Beschreibung

Die Erfindung bezieht sich auf ein Verfahren zum Einbringen einer dreiphasigen Wechselstrom-Wicklung in die Nuten eines langgestreckten Induktors eines Linearmotors, welcher mit nach unten offenen Nuten an der Unterseite einer Deckplatte eines langgestreckten, etwa T-förmigen Trägers befestigt ist, bei welchem eine fertige, aus drei miteinander verbundenen Wicklungssträngen bestehende biegbare Wicklung unter Verwendung eines auf dem Träger bewegbaren Fahrzeugs, an dem mindestens ein Ausleger mit einem unterhalb des Induktors, parallel zu demselben bewegbaren Werkzeug angebracht ist, in die Nuten des Induktors eingedrückt und darin festgelegt wird sowie auf eine Vorrichtung zur Durchführung des Verfahrens (DE-OS 33 23 696).

Linearmotoren sind für elektrische Antriebe unterschiedlichster Art seit langem bekannt. Beim Linearmotor sind sowohl Ständer als auch Läufer im Gegensatz zum konventionellen Motor nicht kreisförmig, sondern geradlinig angeordnet. Die elektrische Energie wird dabei so in mechanische Energie umgesetzt, daß sie unmittelbar für eine Translationsbewegung nutzbar wird. Der Linearmotor kann prinzipiell eine in Nuten des Stators angeordnete Erregerwicklung haben, die bei Wechselstrom dreiphasig ausgebildet ist. Der Läuferteil besteht dann entweder aus einer Schiene aus elektrisch gut leitendem Material, wie Kupfer oder Aluminium (Asynchronmotor), oder aus permanentmagnetischem Material (Synchronmotor). Es sind allerdings auch Linearmotoren bekannt, bei denen die Wicklung im Läuferteil angeordnet ist.

Einsatzgebiete der Linearmotoren sind beispielsweise der Personenverkehr, das Föder- und Transportwesen, Fließbänder, Gepäcktransport, Bergbau, Krane, Schleppanlagen, Schlitten von Werkzeugmaschinen und die Betätigung von Schiebern. Je nach Einsatzgebiet sind dementsprechend die Motoren mehr oder weniger lang. Die Wicklung kann dabei in den Nuten des Stators in üblicher Weise angeordnet werden. Je länger der Stator ist, desto aufwendiger wird die Arbeit zur Fertigung und zur Anbringung der einzelnen Wicklungsstränge.

Für derartige Linearmotoren verwendbare Wicklungen und Herstellungsverfahren für dieselben sind bekannt. So beschreibt die DE-PS 27 21 905 ein Verfahren, mit dem eine dreiphasige Wicklung hergestellt und zum Transport auf eine Spule gewickelt wird. Aus der DE-OS 33 09 051 geht eine Wechselstromwicklung für Linearmotoren hervor, die mit mechanisch festen Bändern versehen ist.

In der eingangs erwähnten DE-OS 33 23 696 ist ein Verfahren mit zugehöriger Vorrichtung beschrieben, mit dem eine vorgefertigte dreiphasige Wicklung automatisch in die Nuten des Induktors eines Linearmotors eingebracht werden kann. Die auf eine Spule aufgewickelte Wicklung wird dazu mittels eines am Fahrzeug angebrachten Werkzeugs in die Nuten des Induktors eingedrückt, der entlang eines Fahrwegs für ein durch den Linearmotor antreibbares Fahrzeug verlegt ist. Mit diesem Verfahren kann die vorgefertigte Wicklung für einen beliebig langen Linearmotor verlegt werden. Die Verlegung wird nur durch das relativ kleine Fassungsvermögen der die Wicklung tragenden Spule beeinträchtigt, da nach dem Verlegen des Vorrats einer Spule erst Verbindungsmuffen gesetzt werden müssen, bevor der nächste Wicklungsabschnitt verlegt werden kann. Da für das Setzen der Verbindungsmuffen Fachleute benötigt werden, ist das bekannte Verlegeverfahren trotz erheblicher Vereinfachung gegenüber anderen Verfahren immer noch aufwendig.

Der Erfindung liegt die Aufgabe zugrunde, ein Verfahren anzugeben, mit dem das Verlegen der dreiphasigen Wicklung eines Linearmotors auf langen Strecken weiter vereinfacht werden kann.

Diese Aufgabe wird mit einem Verfahren der eingangs geschilderten Art gemäß der Erfindung dadurch gelöst,
- daß zunächst die Wicklungsstränge von einem auf dem Fahrzeug angebrachten Vorrat abgezogen und einer auf dem Fahrzeug befindlichen Biegevorrichtung zugeführt werden,
- daß jeder Wicklungsstrang danach in der Biegevorrichtung mäanderförmig gebogen und in gebogenem Zustand in Halterungen eingebracht wird, die mit dem Abstand der Nuten im Induktor entsprechenden Abstanden an einem an dem Fahrzeug angebrachten, in Abzugsrichtung der Wicklungsstränge bewegbaren Montageband angeordnet sind,
- daß die Halterungen anschließend durch mechanisch feste Bänder, die von auf dem Fahrzeug drehbar gelagerten Spulen abgezogen werden, unter gleichzeitiger Festlegung der Wicklungsstränge in den Halterungen mit festem Abstand zueinander miteinander verbunden werden und
- daß abschließend die fertiggestellte Wicklung dem Werkzeug zugeführt wird.

Bei diesem Verfahren wird die zu verlegende Wicklung erst auf dem die Verlegung durchführenden Fahrzeug selbst hergestellt. Auf dem Fahrzeug können sehr große Längen von Wicklungssträngen, beispielsweise auf Spulen, getrennt voneinander gelagert werden, die erst auf dem Fahrzeug zu der dreiphasigen Wicklung zusammengefügt werden. Die Wicklung wird dann ohne Zwischenlagerung direkt in die Nuten des Induktors eingebracht. Das Aufwickeln der fertigen Wicklung auf eine Spule mit begrenztem Fassungsvermögen entfällt also. Es brauchen außerdem nicht mehr viele relativ kurze Wicklungsabschnitte mittels Verbindungsmuffen durchverbunden zu werden, sondern die bei der Verlegung gefertigte Wicklung kann problemlos in Längen gefertigt werden, die der Länge der für die Einspeisung des Stromes in die Wicklung vorgesehenen Speiseabschnitte entspricht. Das Verlegen der Wicklung wird also billiger und auch sicherer, da durch den Fortfall einer Vielzahl von Verbindungsmuffen die Fehlerwahrscheinlichkeit wesentlich verringert ist.

Verfahren und Vorrichtung nach der Erfindung werden im folgenden an Hand der Zeichnungen als Ausführungsbeispiel erläutert.

Es zeigen:
Fig. 1 einen Ausschnitt aus dem Stator eines Linearmotors.
Fig. 2 ebenfalls ausschnittsweise eine Seitenansicht des an einem Träger befestigten Induktors ohne Wicklung.
Fig. 3 einen Querschnitt durch den Träger mit darauf angeordneter Vorrichtung nach der Erfindung.
Fig. 4 eine Seitenansicht der Vorrichtung.
Fig. 5 eine Draufsicht auf die Vorrichtung.

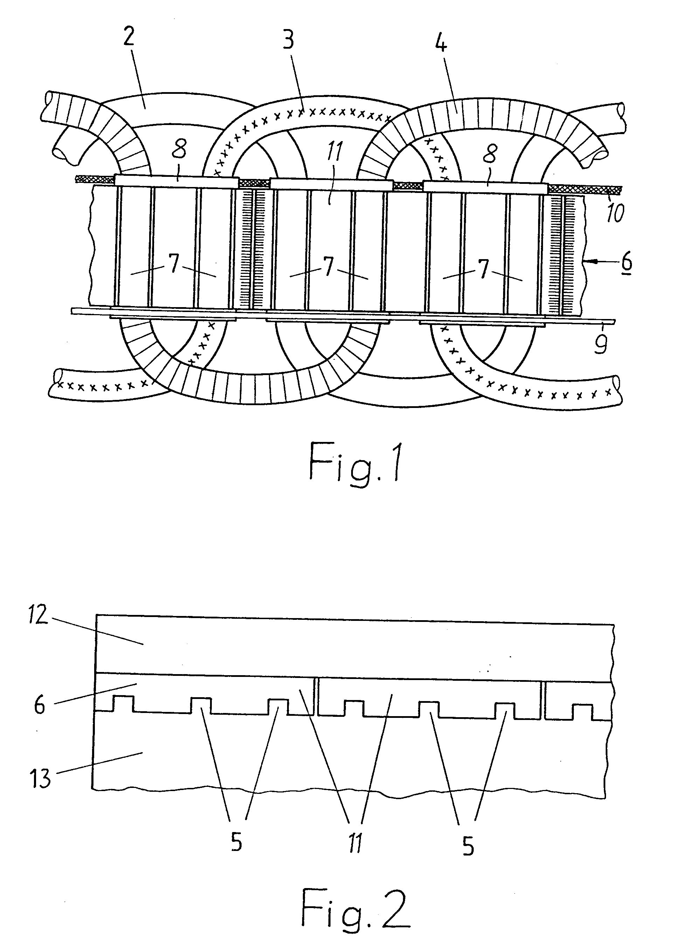

Die mit Verfahren und Vorrichtung nach der Erfindung herzustellende und zu verlegende Wicklung 1 eines Linearmotors kann beispielsweise aus drei die Wicklungsstränge darstellenden elektrischen Kabeln 2,3 und 4 mit elektrisch leitfähigen Mänteln bestehen, die in Fig. 1 durch unterschiedliche Kennzeichnung hervorgehoben sind. Die Kabel 2,3 und 4 liegen als zusammenhängende Wicklung 1 in der dargestellten Form in den Nuten 5 eines Induktors 6 des Linearmotors. Die Nuten 5 sind durch Halterungen 7 so verschlossen, daß die Wicklung 1 nicht mehr aus den Nuten herausfallen kann. Die Halterungen 7 werden während der Fertigung der Wicklung 1 an den Kabeln 2,3 und 4 angebracht. Sie sind vorzugsweise so ausgebildet, daß sie durch federndes Einrasten in den Nuten 5 festgelegt werden können.

Die Halterungen 7 sind beispielsweise als Halbschalen ausgebildet, deren Länge im wesentlichen der Breite des Induktors 6 und damit der Länge der Nuten 5 entspricht. Sie können entsprechend Fig. 1 durch Bügel 8 paarweise zusammengefaßt sein. Die Halterungen 7 sind untereinander durch mechanisch feste Bänder 9 verbunden, die an den axialen Enden der Halterungen 7 festgelegt sind. Die Bänder 9 garantieren einen festen, aber flexiblen Zusammenhalt der fertigen Wicklung 1. Sie verlaufen über die ganze Länge der Wicklung 1 an beiden Enden der Halterungen 7. In Fig. 1 ist nur an einem Ende der Halterungen 7 ein Band 9 schematisch angedeutet. Am anderen Ende ist ein Erdungsband 10 eingezeichnet, das ebenfalls über die ganze Länge der Wicklung 1 verläuft und in gutem Kontakt mit den elektrisch leitfähigen Mänteln der Kabel 2,3 und 4 steht.

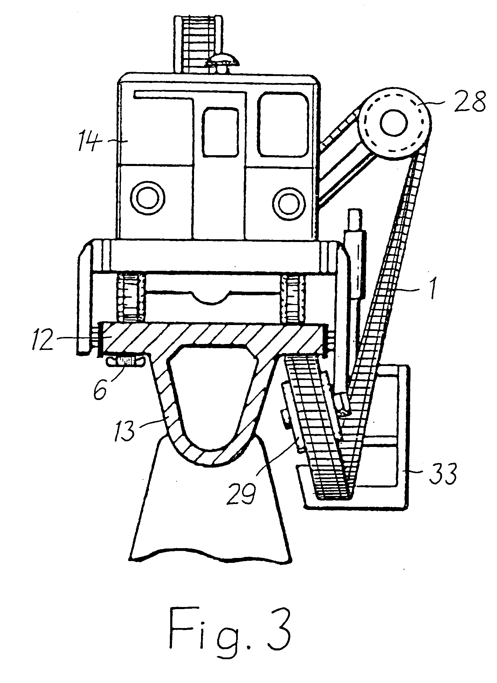

Der aus einer großen Anzahl von hintereinander angeordneten Blechpaketen 11 bestehende Induktor 6 ist an einem etwa T-förmigen, eine Deckplatte 12 aufweisenden Träger 13 befestigt, der beispielsweise aus Beton besteht und ein Profil aufweist, wie es beispielsweise aus Fig. 3 zu ersehen ist. Der Induktor 6 ist mit nach unten offenen Nuten 5 an der Unterseite der Deckplatte 12 festgelegt, deren Oberseite den Fahrweg eines mit dem Linearmotor anzutreibenden Magnetschwebefahrzeugs darstellt.

Die Vorrichtung zur Durchführung des Verfahrens nach der Erfindung ist im Prinzip aus den Fig. 3 bis 5 ersichtlich:
Sie besteht im wesentlichen aus einem Fahrzeug 14, das auf der Oberseite der Deckplatte 12 des Trägers 13 bewegt werden kann, auf welcher später beispielsweise das Magnetschwebefahrzeug fährt. Das Fahrzeug 14 ist beispielsweise an beiden Enden mittels Führungselementen 15 und 16 an den beiden Seitenkanten der Deckplatte 12 geführt, so daß es innerhalb enger Toleranzen dem Verlauf des Trägers 13 folgt. Die Seitenkanten haben ein sehr genaues Maß, da sie später auch zur Führung des Magnetschwebefahrzeugs benötigt werden.

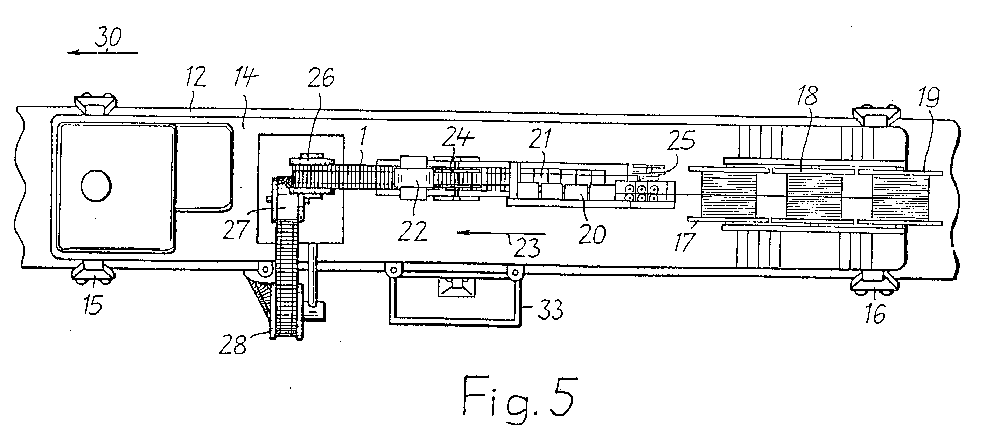

Das Fahrzeug 14 wird auf Rädern weiterbewegt. Es hat einen eigenen Antrieb. Auf dem Fahrzeug 14 sind beispielsweise drei Spulen 17,18 und 19 angebracht, auf denen die drei Kabel 2,3 und 4 getrennt voneinander aufgewickelt sind, aus denen die Wicklung 1 des Linearmotors hergestellt wird. Die Kabel 2,3 und 4 werden von den Spulen 17,18 und 19 abgezogen und einer Biegevorrichtung 20 zugeführt, in welcher sie jeweils einzeln mäanderförmig gebogen werden. Die dabei entstehenden Wickelköpfe können hier ihrer späteren Lage entsprechend auch nach oben oder unten abgekröpft werden. Die gebogenen Kabel 2,3 und 4 gelangen dann zu einem Montageband 21 (Fig. 5), in das bereits Halterungen 7 eingelegt sind. Durch ein Montagewerkzeug 22 werden die jetzt übereinander liegenden Kabel 2,3 und 4 in die Halterungen 7 gedrückt, während das Montageband 21 mit den Halterungen 7 kontinuierlich in Richtung des Pfeiles 23 bewegt wird. Im Montagewerkzeug 22 werden auch die von Spulen 24 abgezogenen Bänder 9 an den Halterungen 7 festgelegt. Auch das von einer Spule 25 abgezogene Erdungsband 10 wird im Montagewerkzeug 22 an der Wicklung 1 befestigt.

Die Anordnung der Wicklungsstränge bzw. Kabel 2,3 und 4 auf den Spulen 17,18 und 19 ist eine bevorzugte Ausführungsform. Prinzipiell könnten die Wicklungsstränge aber auch in anderen "Vorräten" angeordnet sein, die eine ausreichende Länge der Wicklungsstränge aufnehmen können und einen leichten Abzug derselben gestatten. Das Montageband 21 ist vorzugsweise als endloses Band ausgebildet, das über mindestens zwei Umlenkrollen geführt ist. Es kann beispielwseise als Kette ausgeführt sein, welche sehr einfach so gestaltet werden kann, daß die Halterungen 7 mit vorgegebenem Abstand unverrückbar daran angeordnet werden können. Die Halterungen 7 können von Hand oder in bevorzugter Ausführungsform aus einem aufsetzbaren Magazin heraus automatisch am Montageband 21 angebracht werden.

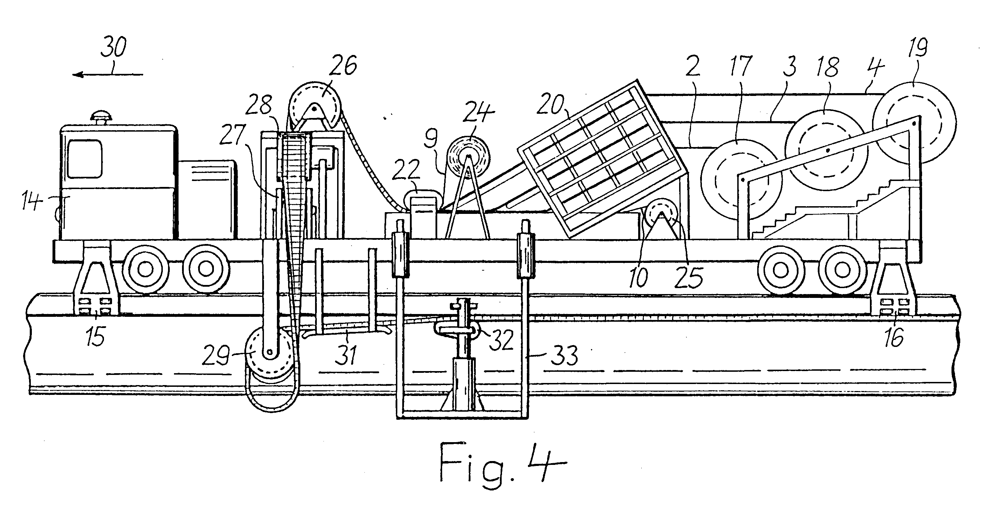

Zum Einbringen der hinter dem Montagewerkzeug 22 fertigen Wicklung 1 in die Nuten 5 des Induktors 6 kann sie über ein Umlenksystem unter die Deckplatte 12 des Trägers 13 geführt werden, das aus Rollen besteht. Von diesen Rollen sind in Fig. 4 die Rollen 26,27,28 und 29 zu erkennen. Von der in Verlegerichtung (Pfeil 30) letzten Rolle 29 wird die Wicklung 1 über eine Auflage 31 zu einem Werkzeug 32 geführt, durch welches sie automatisch in die Nuten 5 des Induktors 6 eingedrückt wird. Durch die Halterungen 7, die federnd in die Nuten 5 einrasten, ist die Wicklung 1 auf diese Weise automatisch in denselben festgelegt. Zum Ausgleich von Differenzen bei den Geschwindigkeiten für Herstellung und Verlegung der Wicklung 1 kann dieselbe zwischen den Rollen 28 und 29 durchhängen.

Die Auflage 31 und das Werkzeug 32 sind an mindestens einem Ausleger 33 angebracht, der seinerseits am Fahrzeug 14 befestigt ist. Der Ausleger 33 ist in der Höhe verstellbar, so daß er durch Einziehen dem zur Verfügung stehenden Freiraum angepaßt werden kann. Diese Bewegbarkeit des Auslegers 33 ist insbesondere bei Weichen und Bahnhöfen erforderlich.

In einer bevorzugten Ausführungsform kann der Ausleger 33 gleichzeitig als Montagebühne ausgebildet sein, auf welcher sich eine Person aufhalten kann, die das Einbringen der Wicklung 1 in die Nuten 5 des Induktors 6 beobachtet. Diese Person kann beispielsweise über eine Leiter vom Fahrzeug 14 auf die Montagebühne gelangen.

Das Verfahren nach der Erfindung läuft wie folgt ab:
Die Kabel 2,3 und 4 werden gleichzeitig von den Spulen 17,18 und 19 abgezogen und der Biegevorrichtung 20 zugeführt. In derselben werden die drei Kabel 2,3 und 4, jedes für sich, mäanderförmig gebogen. Gleichzeitig werden an dem Montageband 21 Halterungen 7 angebracht, die mit dem Montageband 21 in das Montagewerkzeug 22 bewegt werden. In dem Montagewerkzeug 22 werden die gebogenen Kabel 2,3 und 4 zusammen mit dem Erdungsband 10 in die Halterungen 7 gedrückt. Die Halterungen 7 werden in dem Montagewerkzeug 22 außerdem durch die Bänder 9 untereinander befestigt, so daß sich die zusammenhängende Wicklung 1 ergibt. Die Wicklung 1 wird dann über die Rollen 26 bis 29 und über die Auflage 31 zum Werkzeug 32 geführt, das dieselbe automatisch und kontinuierlich in die Nuten 5 des Induktors 6 eindrückt.

Die Fertigung der Wicklung und ihre Verlegung werden also auf dem Fahrzeug 14 durchgeführt, während sich dasselbe in Richtung des Pfeiles 30 bewegt. Die auf den Spulen 17,18 und 19 aufgewickelten Kabel 2,3 und 4 können dazu in Paßlängen so bemessen werden, daß sich für die Wicklung 1 immer ein Abschnitt von beispielsweise 1 km Länge ergibt, der als Speiseabschnitt für die jeweilige Einspeisung des Stromes in die Wicklung 1 dient. Falls längere Speiseabschnitte der Wicklung 1 verlegt werden sollen, können leicht auch neue Spulen mit Kabeln in das Fahrzeug 14 eingesetzt werden, deren Kabel mit den Enden der schon verarbeiteten Kabel verbunden werden.

## Patentansprüche

1. Verfahren zum Einbringen einer dreiphasigen Wechselstrom-Wicklung in die Nuten (5) eines langgestreckten Induktors (6) eines Linearmotors, welcher mit nach unten offenen Nuten (5) an der Unterseite einer Deckplatte (12) eines langgestreckten, etwa T-förmigen Trägers (13) befestigt ist, bei welchem eine fertige, aus drei miteinander verbundenen Wicklungssträngen bestehende biegbare Wicklung (1) unter Verwendung eines auf dem Träger (13) bewegbaren Fahrzeugs (14), an dem mindestens ein Ausleger (33) mit einem unterhalb des Induktors (6), parallel zu demselben bewegbaren Werkzeug (32) angebracht ist, in die Nuten (5) des Induktors (6) eingedrückt und darin festgelegt wird, dadurch gekennzeichnet,
- daß zunächst die Wicklungsstränge von einem auf dem Fahrzeug (14) angebrachten Vorrat abgezogen und einer auf dem Fahrzeug (14) befindlichen Biegevorrichtung (20) zugeführt werden,
- daß jeder Wicklungsstrang danach in der Biegevorrichtung (20) mäanderförmig gebogen und in gebogenem Zustand in Halterungen (7) eingebracht wird, die mit dem Abstand der Nuten (5) im Induktor (6) entsprechenden Abständen an einem an dem Fahrzeug (14) angebrachten, in Abzugsrichtung der Wicklungsstränge bewegbaren Montageband (21) angeordnet sind,
- daß die Halterungen (7) anschließend durch mechanisch feste Bänder (9), die von auf dem Fahrzeug (14) drehbar gelagerten Spulen (24) abgezogen werden, unter gleichzeitiger Festlegung der Wicklungsstränge in den Halterungen (7), mit festem Abstand zueinander miteinander verbunden werden und
- daß abschließend die fertiggestellte Wicklung (1) dem Werkzeug (32) zugeführt wird.

2. Verfahren nach Anspruch 1, dadurch gekennzeichnet, daß an den Halterungen (7) mindestens ein flexibles metallisches Erdungsband (10) festgelegt wird, das von einer auf dem Fahrzeug (14) drehbar angebrachten Spule (25) abgezogen wird und sich in der fertigen Wicklung (1) über deren ganze Länge erstreckt und dabei dicht an allen Wicklungssträngen anliegt.

3. Verfahren nach Anspruch 1 oder 2, dadurch gekennzeichnet, daß die Wicklung (1) vom Fahrzeug (14) über der Umlenkung dienende Rollen (26-29) so zum Ausleger (33) geführt wird, daß sie mindestens an einer Stelle zwischen zwei der Rollen (28,29) durchhängt.

4. Vorrichtung zur Durchführung des Verfahrens nach einem der Ansprüche 1 bis 3, bei welcher an einem Fahrzeug (14), das auf dem langgestreckten, etwa T-förmigen Träger (13) für den Induktor (6) eines Linearmotors bewegbar ist, ein Ausleger (33) mit einem unterhalb des Induktors (6) bewegbaren Werkzeug (32) zum Eindrücken der fertigen Wicklung (1) in die Nuten (5) des Induktors (6) angebracht ist, dadurch gekennzeichnet,
- daß auf dem Fahrzeug (14) außerdem ein Vorrat von drei Wicklungssträngen für die dreiphasige Wicklung (1) des Linearmotors angeordnet ist,
- daß an dem Fahrzeug (14) eine Biegevorrichtung (20) zur mäanderförmigen Formung der drei von dem Vorrat abziehbaren Wicklungsstränge angeordnet ist,
- daß an dem Fahrzeug (14) ein in Abzugsrichtung der Wicklungsstränge bewegbares Montageband (21) zur Aufnahme von Halterungen (7) angebracht ist, in denen die Wicklungsstränge mit einem dem Abstand der Nuten (5) im Induktor (6) entsprechenden Abstand voneinander festlegbar sind und
- daß an dem Fahrzeug (14) Spulen (24) drehbar gelagert sind, von denen mechanisch feste Bänder (9) zur Befestigung der Halterungen (7) untereinander mit festem Abstand zueinander und gleichzeitiger Festlegung der Wicklungsstränge in den Halterungen (7) angebracht sind.

5. Vorrichtung nach Anspruch 4, dadurch gekennzeichnet, daß an dem Fahrzeug (14) mindestens eine Spule (25) mit einem Erdungsband (10) drehbar gelagert ist.

6. Vorrichtung nach Anspruch 4 oder 5, dadurch gekennzeichnet,
- daß für jeden Wicklungsstrang eine eigene Spule (17,18,19) auf dem Fahrzeug (14) vorgesehen ist und
- daß die Spulen (17,18,19) in Längsrichtung des Fahrzeugs (14) gesehen hintereinander angeordnet sind.

## Claims

1. Method for fitting a three-phase AC winding into the slots (5) of an elongated inductor (6) of a linear motor which is fitted by means of slots (5) which are open at the bottom to the underside of a covering plate (12) of an elongated, approximately T-shaped support (13), in which a complete, flexible winding (1), consisting of three interconnected winding phases, is pressed into the slots (5) of the inductor (6) and is fixed therein, using a vehicle (14) which can move on the support (13) and on which at least one beam (33) is fitted which has a tool (32) which can move underneath the inductor (6), parallel to the same, characterised in that
- the winding phases are initially drawn off a dispenser which is fitted to the vehicle (14) and are supplied to a bending device (20) which is located on the vehicle (14),
- thereafter, each winding phase is bent in a meandering shape in the bending device (20) and, in the bent state, it is fitted into holders (7) which are arranged at intervals corresponding to the interval of the slots (5) in the inductor (6) on an assembly strip (21) which is fitted to the vehicle (14) and can move in the drawing-off direction of the winding phases,
- the holders (7) are subsequently interconnected by means of mechanically sturdy strips (9) which are drawn off by coils (24) which are supported on the vehicle (14) such that they can rotate, while the winding phases are simultaneously fixed in the holders (7), with a fixed interval with respect to one another, and,
- the completed winding (1) is finally supplied to the tool (32).

2. Method according to Claim 1, characterised in that at least one flexible, metallic earthing strip (10) is fixed to the holders (7), which earthing strip is drawn off from a coil (25) which is fitted on the vehicle (14) such that it can rotate, and extends in the complete winding (1) in its entire length and, at the same time, rests in a sealing manner on all the winding phases.

3. Method according to Claim 1 or 2, characterised in that the winding (1) is guided from the vehicle (14) over rollers (26-29) which are used for deflection to the beam (33) such that said winding droops between two of the rollers (28, 29) at least at one point.

4. Device for carrying out the method according to one of Claims 1 to 3, characterised in that
- a dispenser having three winding phases for the 3-phase winding (1) of a linear motor is fitted on a vehicle (14) which can move on the elongated, approximately T-shaped support (13) for the inductor (6) of the linear motor,
- a bending device (20) is arranged on the vehicle (14) in order to form the three winding phases which can be drawn off from the dispenser into a meandering shape,
- an assembly strip (21), which can move in the drawing-off direction of the winding phases, is fitted to the vehicle (14) in order to retain holders (7) in which the winding phases can be fixed at an interval from one another corresponding to the interval of the slots (5) in the inductor (6),
- coils (24) are supported on the vehicle (14) such that they can rotate, from which mechanically sturdy strips (9) are fitted for attachment of the holders (7) to one another, at a fixed interval from one another, and simultaneously for fixing the winding phases in the holders (7), and
- a beam (33) having a tool (32) which can move underneath the conductor (6) is fitted on the vehicle (14) in order to press the complete winding (1) into the slots (5) of the inductor (6).

5. Device according to Claim 4, characterised in that at least one coil (25) having an earthing strip (10) is supported on the vehicle (14) such that it can rotate.

6. Device according to Claim 4 or 5, characterised in that a dedicated coil (17, 18, 19) is arranged on the vehicle (14) for each winding phase, and in that the coils (17, 18, 19) are fitted one behind the other, seen in the longitudinal direction of the vehicle (14).

## Revendications

1. Procédé pour placer un bobinage pour courant alternatif triphasé dans les encoches (5) d'un inducteur de grande longueur (6) d'un moteur linéaire, inducteur qui est fixé, avec les encoches (5) ouvertes vers le bas, contre la face inférieure d'une plaque de couverture (12) d'un support de grande longueur (13) à peu près en forme de T, procédé dans le cas duquel on introduit, en le pressant, et on bloque, dans les encoches (5) de l'inducteur (6), un bobinage (1) fini, consitué de trois conducteurs de phase reliés ensemble et pouvant se cintrer, en employant un véhicule (14) qui peut se déplacer sur le support (13) et sur lequel est rapportée au moins une console (33) avec un outil (32) qui peut se déplacer en-dessous de l'inducteur (6), parallèlement à ce dernier, procédé caractérisé.
- par le fait que l'on extrait tout d'abord les conducteurs de phase du bobinage d'un stock disposé sur le véhicule (14) et qu'on les amène à un dispositif de cintrage (20) qui se trouve sur le véhicule (14).
- par le fait qu'ensuite on cintre en forme de méandre chaque conducteur de phase du bobinage dans le dispositif de cintrage (20) et que, à l'état cintré, on l'applique dans des attaches (7) qui sont disposées, à des distances correspondant à la distance des encoches (5) de l'inducteur (6), sur un tapis de montage (21) placé sur le véhicule (14) et pouvant se déplacer dans le sens d'extraction des conducteurs de phase du bobinage,
- par le fait qu'ensuite on relie ensemble, à distance fixe l'une de l'autre, les attaches (7) au moyen de rubans (9) qui sont fixés mécaniquement et sont extraits de bobines (24) portées, avec liberté de rotation, sur le véhicule (14), tout en fixant simultanément les conducteurs de phase du bobinage dans les attaches (7), et
- par le fait qu'enfin on amène le bobinage ainsi achevé (1) à l'outil (32).

2. Procédé selon la revendication 1, caractérisé par le fait que sur les attaches (7) on fixe au moins un ruban métallique flexible de masse (10) que l'on extrait d'une bobine (25) placée, avec liberté de rotation, sur le véhicule (14), qui s'étend dans le bobinage fini (1) sur toute la longueur de ce bobinage et s'applique de façon étanche sur tous les conducteurs de phase du bobinage.

3. Procédé selon la revendication 1 ou 2, caractérisé par le fait que, depuis le véhicule (14), par l'intermédiaire de rouleaux (26, 29) servant de changement de direction, on amène le bobinage (1) à la console (33) de façon qu'il prenne du mou en au moins un endroit entre deux des rouleaux (28, 29).

4. Dispositif pour l'exécution du procédé selon l'une des revendications 1 à 3, caractérisé,
- par le fait que sur un véhicule (14), qui peut se déplacer sur le support de grande longueur, à peu près en forme de T, (13), de l'inducteur (6) d'un moteur linéaire, est rapporté un stock de trois conducteurs de phase pour le bobinage triphasé (1) du moteur linéaire,
- par le fait que sur le véhicule (14) est disposé un dispositif de cintrage (20) pour mettre en forme de méandre les trois conducteurs de phase du bobinage que l'on peut extraire du stock,
- par le fait que sur le véhicule (14) est rapporté un tapis de montage (21) qui peut se déplacer dans la direction de l'extraction des conducteurs de phase du bobinage et qui est prévu pour recevoir les attaches (7) dans lesquelles les conducteurs de phase du bobinage peuvent être bloqués à une distance, l'un l'autre, correspondant à la distance des encoches (5) de l'inducteur (6),
- par le fait que sur le véhicule (14) sont placées, avec liberté de rotation, des bobines (24) desquelles sont extraits des rubans (9) qui sont fixés mécaniquement et sont prévus pour la fixation mutuelle des attaches (7), à distance fixe l'une de l'autre, avec blocage simultané des conducteurs de phase du bobinage dans les attaches (7) et
- par le fait que sur le véhicule (14) est rapportée une console (33) avec un outil (32) qui peut se déplacer en-dessous de l'inducteur (6) et qui est prévu pour introduire, en le pressant, le bobinage (1), fini, dans les encoches (5) de l'inducteur (6).

5. Dispositif selon la revendication 4, caractérisé par le fait que sur le véhicule (14) est placée, avec liberté de rotation, au moins une bobine (25) avec un ruban de masse (10).

6. Dispositif selon la revendication 5, caractérisé par le fait que pour chaque conducteur de phase du bobinage une bobine propre (17, 18, 19) est disposée sur le véhicule (14) et par le fait que les bobines (17, 18, 19) sont rapportées l'une derrière l'autre, vu selon la direction longitudinale du véhicule (14).
